# EUROPEAN PATENT APPLICATION

(11) **EP 4 607 359 A1**
(43) Date of publication of application: **27.08.2025**
(21) Application number: 24218041.2
(22) Date of filing: 06.12.2024
(51) Int. Cl.: G06F 12/02

(54) **STORAGE DEVICE AND OPERATING METHOD OF STORAGE DEVICE**

(30) Priority: 20.02.2024 KR 20240024486; 15.10.2024 US 202418916068
(71) Applicant: Samsung Electronics Co., Ltd., Suwon-si, Gyeonggi-do 16677 (KR)
(72) Inventor: JEONG, Hyewon, 16677 Suwon-si, Gyeonggi-do (KR); JANG, Jonghyun, 16677 Suwon-si, Gyeonggi-do (KR)
(74) Representative: Kuhnen & Wacker Patent- und Rechtsanwaltsbüro PartG mbB

(57) **Abstract**

A storage device is provided. The storage device includes: a nonvolatile memory device; and a controller including a plurality of counters, wherein the controller is configured to: increase a first count of a first counter among the plurality of counters based on first input/output (IO) requests received from an external host device; and increase a second count of a second counter among the plurality of counters based on second IO requests received from the external host device after a first flush request is received from the external host device.

## Description

### CROSS-REFERENCE TO RELATED APPLICATION

This application claims priority under 35 U.S.C. § 119 to Korean Patent Application No. 10-2024-0024486, filed on February 20, 2024, in the Korean Intellectual Property Office, the disclosure of which is incorporated by reference herein in its entirety.

### BACKGROUND

The present disclosure relates to an electronic device, and more particularly, to a storage device supporting a flush operation and an operating method of the storage device.

A storage device may include a nonvolatile memory device. The storage device may retain data even when a power is turned off, and may write data in and read data from the nonvolatile memory device. The storage device may access the nonvolatile memory device depending on a request of an external host device.

The storage device may buffer the request of the external host device and may send a response indicating that the buffered request is completely processed to the external host device. The external host device may receive the response and may then send any other request to the storage device. In a specific situation, the external host device may need to actually complete requests buffered in the storage device. Alternatively, in a specific situation, the storage device may need to actually complete requests buffered therein.

### SUMMARY

One or more embodiments provide a storage device performing a flush operation of actually completing requests buffered in the storage device and supporting the flush operation with a reduced resource and an operating method of the storage device.

According to an aspect of an embodiment, a storage device includes: storage device including: a nonvolatile memory device; and a controller including a plurality of counters, wherein the controller is configured to: increase a first count of a first counter among the plurality of counters based on first input/output (IO) requests received from an external host device; and increase a second count of a second counter among the plurality of counters based on second IO requests received from the external host device after a first flush request is received from the external host device.

According to another aspect of an embodiment, an operating method of a storage device which includes a nonvolatile memory device and a controller includes: receiving, at the controller, first IO requests from an external host device; increasing, at the controller, a first count of a first counter based on the first IO requests; decreasing, at the controller the first count based on the nonvolatile memory device being accessed according to at least one first IO request among the first IO requests; and increasing, at the controller, a second count of a second counter based on second IO requests being received from the external host device after a flush request is received.

According to another aspect of an embodiment, a storage device includes: a nonvolatile memory device; and a controller including a plurality of counters. The controller is configured to: increase a first count of a first counter among the plurality of counters based on first IO requests being received from an external host device; increase a second count of a second counter among the plurality of counters based on second IO requests being received from the external host device after a first flush request is received from the external host device; decrease the first count, independent of the first flush request, based on the nonvolatile memory device being accessed according to one first IO request among the first IO requests; manage a first bitmap including bits respectively corresponding to the plurality of counters; set a bit of the first bitmap corresponding to the first counter to a first value based on the first flush request being received and the first count not being "0"; and set the bit of the first bitmap corresponding to the first counter to a second value based on the first flush request being received and the first count being "0".

### BRIEF DESCRIPTION OF DRAWINGS

The above and other aspects and features will be more apparent from the following description of embodiments, taken in conjunction with the accompanying drawings.
FIG. 1 illustrates a computing system according to an embodiment.
FIG. 2 illustrates an operating method of a storage device according to an embodiment.
FIG. 3 illustrates a counter and a register of a memory controller according to an embodiment.
FIG. 4 illustrates an example in which a memory controller manages input/output (IO) requests of a host device by using a counter, according to an embodiment.
FIG. 5 illustrates an example of a process in which IO requests are managed by a counter, according to an embodiment.
FIG. 6 illustrates an example in which a memory controller manages IO requests and a flush request of a host device by using a counter and a register, according to an embodiment.
FIG. 7 illustrates an example of a process in which IO requests and a flush request are managed by a counter and a register, according to an embodiment.
FIG. 8 illustrates subsequent operations in which a memory controller manages IO requests of a host device by using a counter, according to an embodiment.
FIG. 9 illustrates an example of a process in which IO requests are managed by a counter, according to an embodiment.
FIG. 10 illustrates subsequent operations in which a memory controller manages IO requests and a flush request of a host device by using a counter and a register, according to an embodiment.
FIG. 11 illustrates an example of a process in which IO requests and a flush request are managed by a counter and a register, according to an embodiment.
FIG. 12 illustrates subsequent operations in which a memory controller manages IO requests of a host device by using a counter, according to an embodiment.
FIGS. 13 and 14 illustrate an example of a process in which IO requests are managed by a counter, according to an embodiment.
FIG. 15 is a diagram illustrating a system according to an embodiment.

### DETAILED DESCRIPTION

Below, embodiments will be described with reference to the accompanying drawings. Like components are denoted by like reference numerals throughout the specification, and repeated descriptions thereof are omitted. It will be understood that when an element or layer is referred to as being "on," "connected to" or "coupled to" another element or layer, it can be directly on, connected or coupled to the other element or layer, or intervening elements or layers may be present. By contrast, when an element is referred to as being "directly on," "directly connected to" or "directly coupled to" another element or layer, there are no intervening elements or layers present. Embodiments described herein are example embodiments, and thus, the present disclosure is not limited thereto, and may be realized in various other forms. Each embodiment provided in the following description is not excluded from being associated with one or more features of another example or another embodiment also provided herein or not provided herein but consistent with the present disclosure.

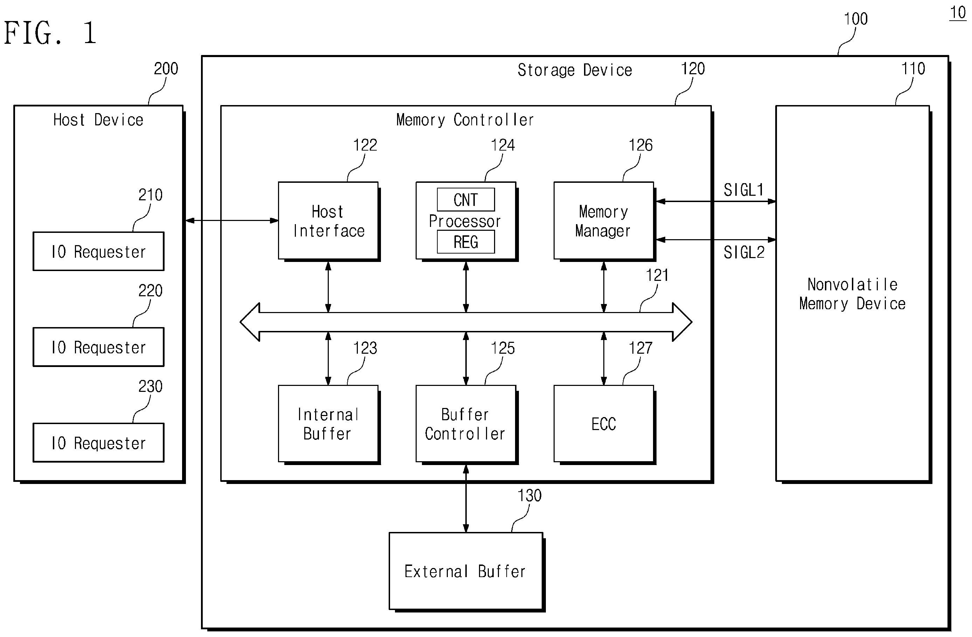

FIG. 1 illustrates a computing system 10 according to an embodiment. Referring to FIG. 1, the computing system 10 may include a storage device 100 and a host device 200.

The storage device 100 may include a nonvolatile memory device 110, a memory controller 120, and an external buffer 130. The nonvolatile memory device 110 may include a plurality of memory cells. Each of the plurality of memory cells may store two or more bits.

For example, the nonvolatile memory device 110 may include at least one of various nonvolatile memory devices such as a flash memory device, a phase-change memory device, a ferroelectric memory device, a magnetic memory device, and a resistive memory device.

The memory controller 120 may receive various requests for writing data in the nonvolatile memory device 110 or reading data from the nonvolatile memory device 110, from the external host device 200. The memory controller 120 may store (or buffer) user data communicated with the external host device 200 in the external buffer 130 and may store meta data for managing the storage device 100 in the external buffer 130.

The memory controller 120 may access the nonvolatile memory device 110 through first signal lines SIGL1 and second signal lines SIGL2. For example, the memory controller 120 may transmit a command and an address to the nonvolatile memory device 110 through the first signal lines SIGL1. The memory controller 120 may exchange data with the nonvolatile memory device 110 through the first signal lines SIGL1.

The memory controller 120 may send a first control signal to the nonvolatile memory device 110 through the second signal lines SIGL2. The memory controller 120 may receive a second control signal from the nonvolatile memory device 110 through the second signal lines SIGL2.

In an embodiment, the memory controller 120 may be configured to control two or more nonvolatile memory devices. The memory controller 120 may include first signal lines and second signal lines independently for each of the two or more nonvolatile memory devices.

As another example, the memory controller 120 may share first signal lines with the two or more nonvolatile memory devices. The memory controller 120 may share some of second signal lines with the two or more nonvolatile memory devices and may separately provide other second signal lines.

The external buffer 130 may include a random access memory. For example, the external buffer 130 may include at least one of a dynamic random access memory, a phase-change random access memory, a ferroelectric random access memory, a magnetic random access memory, and a resistive random access memory.

The memory controller 120 may include a bus 121, a host interface 122, an internal buffer 123, a processor 124, a buffer controller 125, a memory manager 126, and an error correction code (ECC) block 127.

The bus 121 may provide communication channels between the components of the memory controller 120. The host interface 122 may receive various requests from the external host device 200 and may parse the received requests. The host interface 122 may store the parsed requests in the internal buffer 123.

The host interface 122 may send various responses to the external host device 200. The host interface 122 may exchange signals with the external host device 200 in compliance with a communication protocol. The internal buffer 123 may include a random access memory. For example, the internal buffer 123 may include a static random access memory or a dynamic random access memory.

The processor 124 may execute an operating system or firmware for driving the memory controller 120. The processor 124 may read the parsed requests stored in the internal buffer 123 and may generate addresses and commands for controlling the nonvolatile memory device 110. The processor 124 may provide the generated commands and addresses to the memory manager 126.

The processor 124 may store various meta data for managing the storage device 100 in the internal buffer 123. The processor 124 may access the external buffer 130 through the buffer controller 125. The processor 124 may control the buffer controller 125 and the memory manager 126 such that the user data stored in the external buffer 130 are provided to the nonvolatile memory device 110.

The processor 124 may control the host interface 122 and the buffer controller 125 such that the data stored in the external buffer 130 are provided to the external host device 200. The processor 124 may control the buffer controller 125 and the memory manager 126 such that the data received from the nonvolatile memory device 110 are stored in the external buffer 130. The processor 124 may control the host interface 122 and the buffer controller 125 such that the data received from the external host device 200 are stored in the external buffer 130.

The processor 124 may include a counter circuit CNT and a register circuit REG. The counter circuit CNT may include a plurality of counters. The processor 124 may manage input/output (IO) requests and flush requests of the external host device 200 by using the plurality of counters of the counter circuit CNT. The register circuit REG may include a plurality of registers. The processor 124 may manage the flush requests of the external host device 200 by using the plurality of registers of the register circuit REG.

Under control of the processor 124, the buffer controller 125 may write data in the external buffer 130 or may read data from the external buffer 130. The memory manager 126 may communicate with the nonvolatile memory device 110 through the first signal lines SIGL1 and the second signal lines SIGL2 under control of the processor 124.

The memory manager 126 may access the nonvolatile memory device 110 under control of the processor 124. For example, the memory manager 126 may access the nonvolatile memory device 110 through the first signal lines SIGL1 and the second signal lines SIGL2. The memory manager 126 may communicate with the nonvolatile memory device 110, based on a protocol in compliance with the standard or defined by a manufacturer.

The error correction code block 127 may perform error correction encoding for data to be provided to the nonvolatile memory device 110 by using the error correction code ECC. The error correction code block 127 may perform error correction decoding for data received from the nonvolatile memory device 110 by using the error correction code ECC.

In an embodiment, the external buffer 130 and the buffer controller 125 may be omitted from the storage device 100. When the external buffer 130 and the buffer controller 125 are omitted, the functions which are described as being performed by the external buffer 130 and the buffer controller 125 may be performed by the internal buffer 123.

The host device 200 may be the external host device 200 of the storage device 100 in that the host device 200 is outside the storage device 100. The host device 200 may be implemented, for example, with a stationary computing system including a personal computer, a server, or a workstation or a mobile computing system including a notebook computer, a smartphone, a smart pad, or a wearable computing device.

The host device 200 may include a first input/output (IO) (IO) requester 210 (e.g., an IO requester circuit), a second IO requester 220, and a third IO requester 230. The first IO requester 210, the second IO requester 220, and the third IO requester 230 may generate IO requests for the storage device 100 independently of each other and may send the generated IO requests to the storage device 100 independently of each other. For example, the IO request may include a request directing the host device 200 to write data in the storage device 100, and a request which directs an operation associated with data which the host device 200 writes in the storage device 100, such as a read request or a trim request.

The first IO requester 210, the second IO requester 220, and the third IO requester 230 may generate flush requests independently of each other and may send the generated flush requests to the storage device 100 independently of each other. The flush request may be a request directing the storage device 100 to complete buffered IO requests.

In an embodiment, the processor 124 may internally generate the flush request independently of the first IO requester 210, the second IO requester 220, and the third IO requester 230. For example, when a sudden power off (SPO) event is detected, the processor 124 may internally generate the flush request.

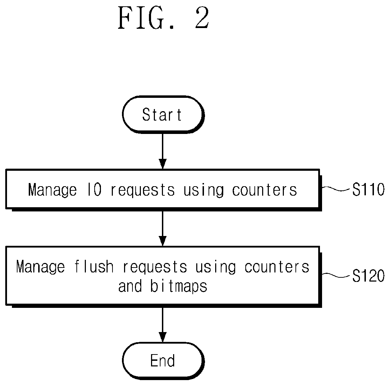

FIG. 2 illustrates an operating method of the storage device 100 according to an embodiment. Referring to FIGS. 1 and 2, in operation S110, the storage device 100 may manage IO requests by using counters. For example, the processor 124 of the memory controller 120 of the storage device 100 may manage IO requests received from the host device 200 by using the plurality of counters of the counter circuit CNT.

In operation S120, the storage device 100 may manage flush requests by using the counters and bitmaps. For example, the processor 124 of the memory controller 120 of the storage device 100 may manage the flush requests by using the plurality of counters of the counter circuit CNT and bitmaps stored in the plurality of registers of the register circuit REG.

In some embodiments, the IO requests and the flush requests may be managed by using the bitmaps. In this case, as the number of IO requesters of the host device 200 increases or as the maximum number of IO commands capable of being simultaneously processed by the memory controller 120 increases, the required capacity of the bitmaps which the processor 124 of the memory controller 120 of the storage device 100 manages may increase. When the capacity of the bitmaps which the processor 124 manages increases, the number of registers necessary for the memory controller 120 to manage the IO requests and the flush requests, that is, required resources, may increase.

The memory controller 120 according to an embodiment may manage the IO requests and the flush requests by using the bitmaps and the counters. Some of the bitmaps may be replaced with binary information of a counter by replacing some of the bitmaps with counters. Accordingly, a resource which is necessary for the memory controller 120 to manage the IO requests and the flush requests may decrease.

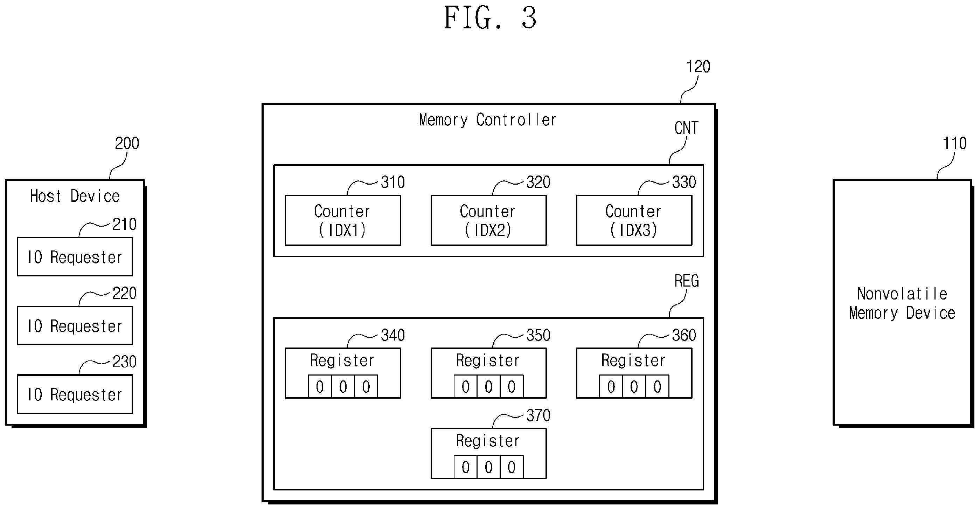

FIG. 3 illustrates the counter circuit CNT and the register circuit REG of the memory controller 120 according to an embodiment. In an embodiment, the relationship of the counter circuit CNT and the register circuit REG of the memory controller 120 with the host device 200 and the nonvolatile memory device 110 is illustrated in FIG. 3.

Referring to FIG. 3, the counter circuit CNT may include a first counter 310, a second counter 320, and a third counter 330. The first counter 310, the second counter 320, and the third counter 330 may be identified as having a first index IDX1, a second index IDX2, and a third index IDX3, respectively. Each of the first counter 310, the second counter 320, and the third counter 330 may count the number of IO requests which are received from the host device 200 and are buffered. For example, each of the first counter 310, the second counter 320, and the third counter 330 may count the number of IO requests corresponding to different flush requests. The first index IDX1 of the first counter 310, the second index IDX2 of the second counter 320, and the third index IDX3 of the third counter 330 may be flush indexes indicating different flush requests.

In an embodiment, when the flush request is received, the memory controller 120 may sequentially select the first counter 310, the second counter 320, and the third counter 330 (or the first index IDX1, the second index IDX2, and the third index IDX3) in a round robin manner for counting.

In an embodiment, each of the first IO requester 210, the second IO requester 220, and the third IO requester 230 of the host device 200 may send the flush request to the memory controller 120 and then may not send additional IO requests or an additional flush request to the memory controller 120 until the completion of the flush request is notified from the memory controller 120, for example, a response indicating that operations according to the flush request are completed is received. According to the above rule, the number of counters of the counter circuit CNT may be equal to the number of IO requesters of the host device 200. When the processor 124 is implemented to internally generate a flush request, the number of counters of the counter circuit CNT may be more than the number of IO requesters of the host device 200 by as many as the number of flush requests which the processor 124 internally generates.

Each of the first IO requester 210, the second IO requester 220, and the third IO requester 230 of the host device 200 may send the flush request to the memory controller 120 and then may send additional IO requests or an additional flush request to the memory controller 120 regardless of whether the completion of the flush request is notified from the memory controller 120, for example, whether a response indicating that operations according to the flush request are completed is received. According to the above rule, the number of counters of the counter circuit CNT may be more than the number of IO requesters of the host device 200.

The register circuit REG may include a first register 340, a second register 350, a third register 360, and a fourth register 370. The first register 340 may store information about a current status of count values of the first counter 310, the second counter 320, and the third counter 330 in the form of a bitmap. For example, when a count value of a counter corresponding to the flush request is "0" when the flush request is received, the memory controller 120 may set a bit of the bitmap of the first register 340, which indicates the counter corresponding to the flush request, to a second value (e.g., 0). When a count value of a counter corresponding to the flush request is not "0" when the flush request is received, the memory controller 120 may set a bit of the bitmap of the first register 340, which indicates the counter corresponding to the flush request, to a first value (e.g., 1).

When the flush request of any one of the first IO requester 210, the second IO requester 220, and the third IO requester 230 of the host device 200 is received (or when the flush request is internally generated by the processor 124), the memory controller 120 may capture the bitmap of the first register 340 by using the second register 350. In this regard, the bitmap of the first register 340 may be duplicated in the second register 350. For example, bits of the bitmap of the second register 350 may be set to have the same values as the bits of the bitmap of the first register 340 when the flush request of any one IO requester is received.

When the flush request of another of the first IO requester 210, the second IO requester 220, and the third IO requester 230 of the host device 200 is received (or when the flush request is internally generated by the processor 124), the memory controller 120 may capture the bitmap of the first register 340 by using the third register 360. For example, bits of the bitmap of the third register 360 may be set to have the same values as the bits of the bitmap of the first register 340 when the flush request of another IO requester is received.

When the flush request of the other of the first IO requester 210, the second IO requester 220, and the third IO requester 230 of the host device 200 is received (or when the flush request is internally generated by the processor 124), the memory controller 120 may capture the bitmap of the first register 340 by using the fourth register 370. For example, bits of the bitmap of the fourth register 370 may be set to have the same values as the bits of the bitmap of the first register 340 when the flush request of the other IO requester is received.

In an embodiment, when the flush request is received, the memory controller 120 may select a register used for the capture in the round robin manner. In an embodiment, the number of registers of the register circuit REG may be more than the number of counters of the counter circuit CNT by "1".

As another example, registers used for the capture may be designated to be dedicated for each of the first IO requester 210, the second IO requester 220, and the third IO requester 230. For example, the second register 350 may be configured to capture the first register 340 when the first IO requester 210 sends the flush request. The third register 360 may be configured to capture the first register 340 when the second IO requester 220 sends the flush request. The fourth register 370 may be configured to capture the first register 340 when the third IO requester 230 sends the flush request.

When the processor 124 is configured to internally generate the flush request, the register circuit REG may further include a register configured to capture the first register 340 when the processor 124 generates the flush request.

In an embodiment, the memory controller 120 may perform scheduling for the IO requests received from the host device 200 (or for the flush request internally generated by the processor 124). The memory controller 120 may process the IO request with a high priority or the IO requests set to be preferentially processed (i.e., depending on an internal policy), prior to any other IO requests.

In an embodiment, the memory controller 120 may be set to guarantee the order of processing the flush requests (or the flush request internally generated by the processor 124). The memory controller 120 may be set to process the flush request first received and to process the flush request received later. The scheduling of the IO requests may be performed regardless of guaranteeing the order of the flush requests.

In an embodiment, the memory controller 120 may manage information about IO requests to be processed by each of the flush requests received from the host device 200, by using the counters of the counter circuit CNT. The memory controller 120 may determine whether all the IO requests corresponding to each of the flush requests are processed, that is, whether each of the flush requests is processed, by using the counters of the counter circuit CNT.

In an embodiment, the memory controller 120 may guarantee the order of processing the flush requests received from the host device 200, by using the bitmaps captured (or stored) in the registers of the register circuit REG. The memory controller 120 may manage the flush requests by using the bitmaps of the register circuit REG such that the flush request first received is processed and the flush request received later is then processed.

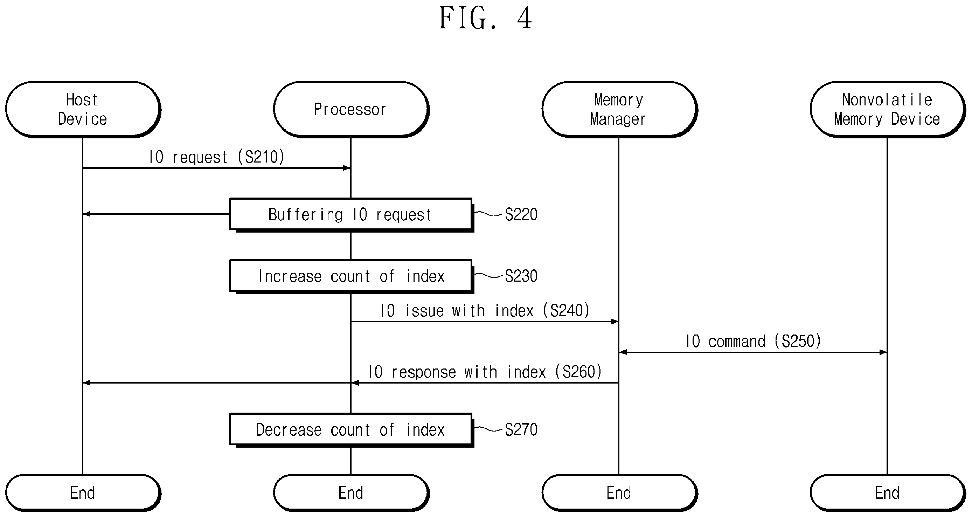

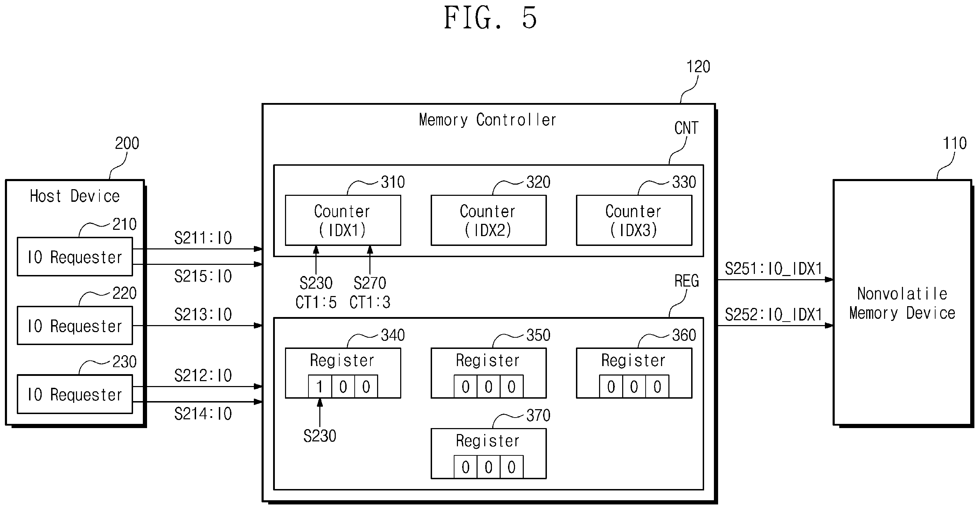

FIG. 4 illustrates an example in which the memory controller 120 manages IO requests of the host device 200 by using the counter circuit CNT. FIG. 5 illustrates an example of a process in which IO requests are managed by the counter circuit CNT depending on the method of FIG. 4. In an embodiment, below, an example in which the first IO requester 210, the second IO requester 220, or the third IO requester 230 generates the flush request will be described. However, the processor 124 may also internally generate the flush request. The flush request internally generated by the processor 124 may be processed to be the same as the flush requests generated by the first IO requester 210, the second IO requester 220, and the third IO requester 230.

Referring to FIGS. 1, 4, and 5, in operation S210, the host device 200 may send the IO request to the memory controller 120 (e.g., the processor 124 of the memory controller 120). In an embodiment, the host device 200 may sequentially send five IO requests IO to the memory controller 120 as illustrated by operation S211, operation S212, operation S213, operation S214, and operation S215 in FIG. 5.

For example, in operation S211, the first IO requester 210 may send the IO request IO to the memory controller 120. In operation S212, the third IO requester 230 may send the IO request IO to the memory controller 120. In operation S213, the second IO requester 220 may send the IO request IO to the memory controller 120. In operation S214, the third IO requester 230 may send the IO request IO to the memory controller 120. In operation S215, the first IO requester 210 may send the IO request IO to the memory controller 120.

In operation S220, the processor 124 of the memory controller 120 may buffer the IO requests received from the host device 200. For example, the processor 124 may add an IO request to an IO queue provided in the internal buffer 123. When write data are received together with the IO request, the memory controller 120 may store the write data in the external buffer 130. The memory controller 120 may send, to the host device 200, a response indicating that the IO request is completely buffered.

In operation S230, the processor 124 of the memory controller 120 may increase a count of a counter corresponding to a current index. In an embodiment, the index may be a flush index which is identified by the first counter 310, the second counter 320, or the third counter 330. In an embodiment, the current index may be the first index IDX1. In the same index (i.e., the first index IDX1), the IO requests IO of the first IO requester 210, the second IO requester 220, and the third IO requester 230 may increase a count of the same counter (e.g., the first counter 310).

When the count value of the first counter 310 of the current index (e.g., the first index IDX1) is not "0", the memory controller 120 may set a corresponding bit of the first register 340 to "1". The bitmap of the first register 340 may be "100".

In an embodiment, the processor 124 may increase a first count CT1 of the first counter 310 each time the IO request IO is received from the host device 200. Because the IO request IO is received from the host device 200 five times, in operation S230, the first count CT1 of the first counter 310 may increase to "5".

In operation S240, the processor 124 of the memory controller 120 may send an IO issue with the current index to the memory manager 126. For example, the IO issue may be an internal request or instruction, which includes a corresponding index, generated based in the IO request. For example, the IO issue corresponding to the IO request managed by the first counter 310 may be sent to the memory manager 126 in association with the first index IDX1. For example, the IO issue may further include a command type, an address, and a data pointer, which are associated with the IO issue.

In operation S250, the memory manager 126 may send an IO command to the nonvolatile memory device 110 such that an operation according to the IO request is performed. When the IO request is a write request, the memory manager 126 may further send data to the nonvolatile memory device 110. When the IO request is a read request, the memory manager 126 may receive data from the nonvolatile memory device 110. The memory manager 126 may identify the completion of the operation according to the IO request by identifying the transition of a specific signal, for example, a ready/busy signal from the nonvolatile memory device 110.

When the completion of the operation according to the IO request is identified, in operation S260, the memory manager 126 may send an IO response with the current index to the processor 124. For example, the IO response may further include a command type, a state indicating a success or failure, and a data pointer.

When the IO response is received, the processor 124 may send, to the host device 200, a response providing notification that the operation according to the IO request is completed. For example, when the IO request is the write request, the IO response may include information about a write result. When the IO request is the read request, the IO response may be sent to the host device 200 together with data. When the IO response is received, in operation S270, the processor 124 may decrease a count of a counter corresponding to the current index.

In an embodiment, as illustrated in operation S251 and operation S252 of FIG. 5, the memory manager 126 of the memory controller 120 may send two IO commands corresponding to the first index IDX1 to the nonvolatile memory device 110. Accordingly, in operation S270, the first count CT1 of the first counter 310 corresponding to the first index IDX1 may decrease to "3".

In an embodiment, the memory manager 126 may queue IO issues provided from the processor 124. The memory manager 126 may send the IO command to the nonvolatile memory device 110 based on the queued IO issues. The processor 124 and the memory manager 126 may identify an index (or a counter associated with an index) corresponding to the processed IO issue by adding the first index IDX1 to the IO issue and the IO response.

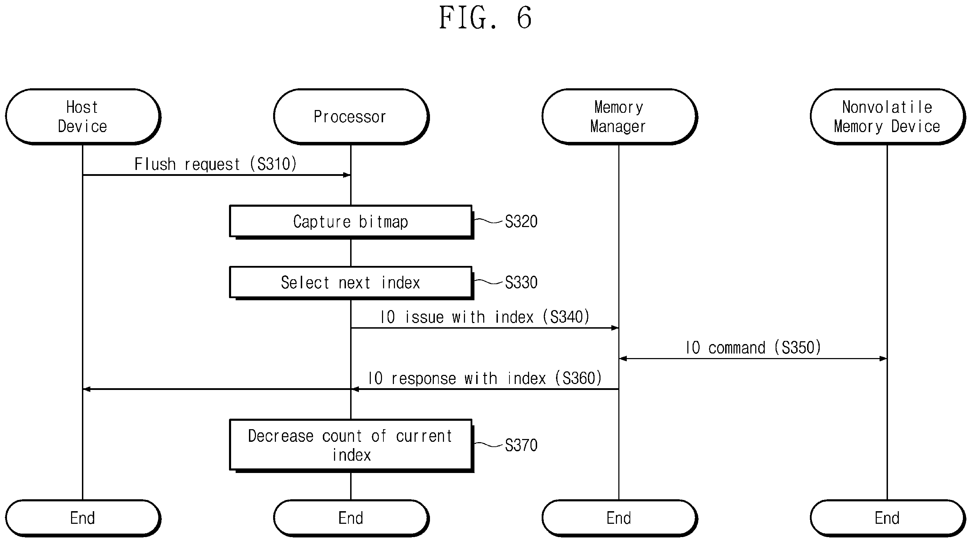

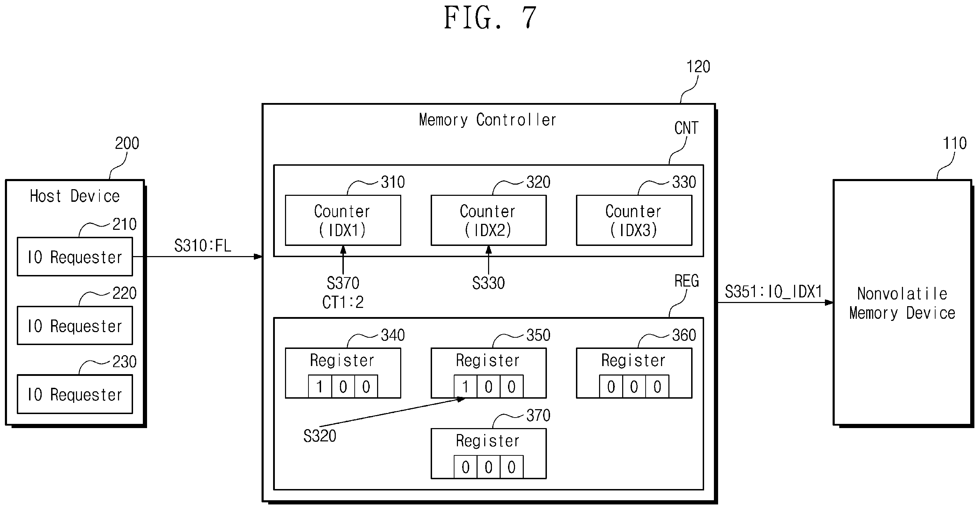

FIG. 6 illustrates an example in which the memory controller 120 manages IO requests and a flush request of the host device 200 by using the counter circuit CNT and the register circuit REG. FIG. 7 illustrates an example of a process in which IO requests and a flush request are managed by the counter circuit CNT and the register circuit REG depending on the method of FIG. 6.

Referring to FIGS. 1, 6, and 7, in operation S310, the host device 200 may send a flush request FL to the memory controller 120 (e.g., the processor 124 of the memory controller 120). For example, the first IO requester 210 of the host device 200 may send the flush request FL to the memory controller 120.

In operation S320, the processor 124 of the memory controller 120 may capture a bitmap. The processor 124 may capture the bitmap of the first register 340 and may store the captured bitmap in the second register 350. That is, the processor 124 may set values of the bits of the bitmap of the second register 350 to be the same as the values of the bits of the bitmap of the first register 340. Accordingly, the bitmap of the first register 340 may be "100," and the bitmap of the second register 350 may also be "100".

In operation S330, the processor 124 of the memory controller 120 may select a next index. For example, the next index may be the second index IDX2. For counting, the processor 124 may select the second counter 320 corresponding to the second index IDX2.

In operation S340, the processor 124 of the memory controller 120 may send an IO issue with the current index to the memory manager 126. For example, the IO issue corresponding to the IO request managed by the first counter 310 may be sent to the memory manager 126 in association with the first index IDX1. For example, the IO issue may further include a command type, an address, and a data pointer, which are associated with the IO issue.

In operation S350, the memory manager 126 may send the IO command to the nonvolatile memory device 110 such that an operation according to the IO request is performed. When the IO request is the write request, the memory manager 126 may further send data to the nonvolatile memory device 110. When the IO request is the read request, the memory manager 126 may receive data from the nonvolatile memory device 110. The memory manager 126 may identify the completion of the operation according to the IO request by identifying the transition of a specific signal, for example, the ready/busy signal from the nonvolatile memory device 110.

When the completion of the operation according to the IO request is identified, in operation S360, the memory manager 126 may send the IO response with the current index to the processor 124. For example, the IO response may further include a command type, a state indicating a success or failure, and a data pointer.

When the IO response is received, the processor 124 may send, to the host device 200, a response providing notification that the operation according to the IO request is completed. When the IO response is received, in operation S370, the processor 124 may decrease a count of a counter corresponding to the current index.

In an embodiment, as illustrated in operation S351 of FIG. 7, the memory manager 126 of the memory controller 120 may send one IO command corresponding to the first index IDX1 to the nonvolatile memory device 110. Accordingly, in operation S370, the first count CT1 of the first counter 310 corresponding to the first index IDX1 may decrease to "2".

In an embodiment, when the first count CT1 of the first counter 310 corresponding to the first index IDX1 is "0", in response to the flush request FL in operation S310, the memory controller 120 may send, to the host device 200, a response indicating that the flush operation is completed. Afterwards, operation S320 and operation S330 may be omitted. Alternatively, the memory controller 120 may perform operation S320 and operation S330 such that the first counter 310, the second counter 320, and the third counter 330 are sequentially selected in the round robin manner for counting and the second register 350, the third register 360, and the fourth register 370 are sequentially selected in the round robin manner for capturing.

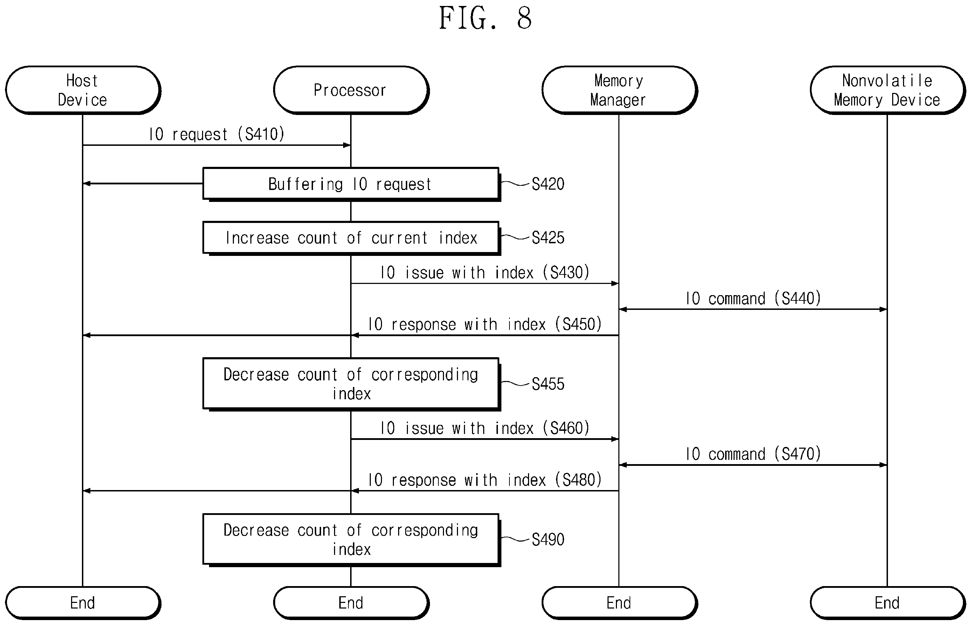

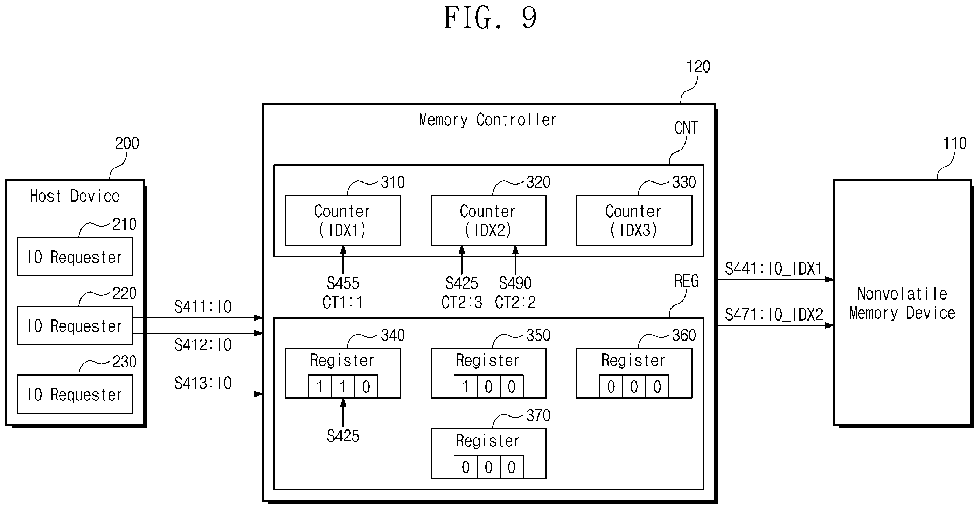

FIG. 8 illustrates subsequent operations in which the memory controller 120 manages IO requests of the host device 200 by using the counter circuit CNT. FIG. 9 illustrates an example of a process in which IO requests are managed by the counter circuit CNT depending on the method of FIG. 8.

Referring to FIGS. 1, 8, and 9, in operation S410, the host device 200 may send the IO request to the memory controller 120 (e.g., the processor 124 of the memory controller 120). In an embodiment, as illustrated by operation S411, operation S412, and operation S413 in FIG. 9, the host device 200 may sequentially send three IO requests IO to the memory controller 120.

For example, in operation S411, the second IO requester 220 may send the IO request IO to the memory controller 120. In operation S412, the second IO requester 220 may send the IO request IO to the memory controller 120. In operation S413, the third IO requester 230 may send the IO request IO to the memory controller 120. In an embodiment, the first IO requester 210 which sends the flush request to the memory controller 120 may not send the IO request to the memory controller 120. For example, until a response indicating that the flush request is completed is received from the memory controller 120, the first IO requester 210 may not send the IO request to the memory controller 120. However, embodiments are not limited thereto. Even though a response is not received after the flush request is sent, the first IO requester 210 may send the IO request to the memory controller 120.

In operation S420, the processor 124 of the memory controller 120 may buffer the IO request received from the host device 200. For example, the processor 124 may add the IO request to the IO queue provided in the internal buffer 123. When write data are received together with the IO request, the memory controller 120 may store the write data in the external buffer 130. The memory controller 120 may send, to the host device 200, a response indicating that the IO request is completely buffered.

In operation S425, the processor 124 of the memory controller 120 may increase a count of a counter corresponding to a current index. In an embodiment, the current index may be the second index IDX2. When the count value of the second counter 320 of the current index (e.g., the second index IDX2) is not "0", the memory controller 120 may set a corresponding bit of the first register 340 to "1". The bitmap of the first register 340 may be "110".

In an embodiment, the processor 124 may increase a second count CT2 of the second counter 320 each time the IO request IO is received from the host device 200. Because the IO request IO is received from the host device 200 three times, in operation S425, the second count CT2 of the second counter 320 may increase to "3".

In operation S430, the processor 124 of the memory controller 120 may send an IO issue with an index to the memory manager 126. For example, the IO issue corresponding to the IO request managed by the first counter 310 may be sent to the memory manager 126 in association with the first index IDX1. The IO issue corresponding to the IO request managed by the second counter 320 may be sent to the memory manager 126 in association with the second index IDX2. For example, the IO issue may further include a command type, an address, and a data pointer, which are associated with the IO issue.

In operation S440, the memory manager 126 may send the IO command to the nonvolatile memory device 110 such that an operation according to the IO request is performed. When the IO request is the write request, the memory manager 126 may further send data to the nonvolatile memory device 110. When the IO request is the read request, the memory manager 126 may receive data from the nonvolatile memory device 110. The memory manager 126 may identify the completion of the operation according to the IO request by identifying the transition of a specific signal, for example, the ready/busy signal from the nonvolatile memory device 110.

When the completion of the operation according to the IO request is identified, in operation S450, the memory manager 126 may send the IO response with an index to the processor 124. For example, the IO response may further include a command type, a state indicating a success or failure, and a data pointer.

When the IO response is received, the processor 124 may send, to the host device 200, a response providing notification that the operation according to the IO request is completed. When the IO response is received, in operation S455, the processor 124 may decrease a count of a counter corresponding to the index.

In an embodiment, as illustrated in operation S441 of FIG. 9, the memory manager 126 of the memory controller 120 may send one IO command corresponding to the first index IDX1 to the nonvolatile memory device 110. Accordingly, in operation S455, the first count CT1 of the first counter 310 corresponding to the first index IDX1 may decrease to "1".

In operation S460, the processor 124 of the memory controller 120 may send an IO issue with the index to the memory manager 126. In operation S470, the memory manager 126 may send the IO command to the nonvolatile memory device 110 such that an operation according to the IO request is performed.

When the completion of the operation according to the IO request is identified, in operation S480, the memory manager 126 may send the IO response with the index to the processor 124. For example, the IO response may further include a command type, a state indicating a success or failure, and a data pointer.

When the IO response is received, the processor 124 may send, to the host device 200, a response providing notification that the operation according to the IO request is completed. When the IO response is received, in operation S490, the processor 124 may decrease a count of a counter corresponding to the index.

In an embodiment, as illustrated in operation S471 of FIG. 9, the memory manager 126 of the memory controller 120 may send one IO command corresponding to the second index IDX2 to the nonvolatile memory device 110. Accordingly, in operation S490, the second count CT2 of the second counter 320 corresponding to the second index IDX2 may decrease to "2".

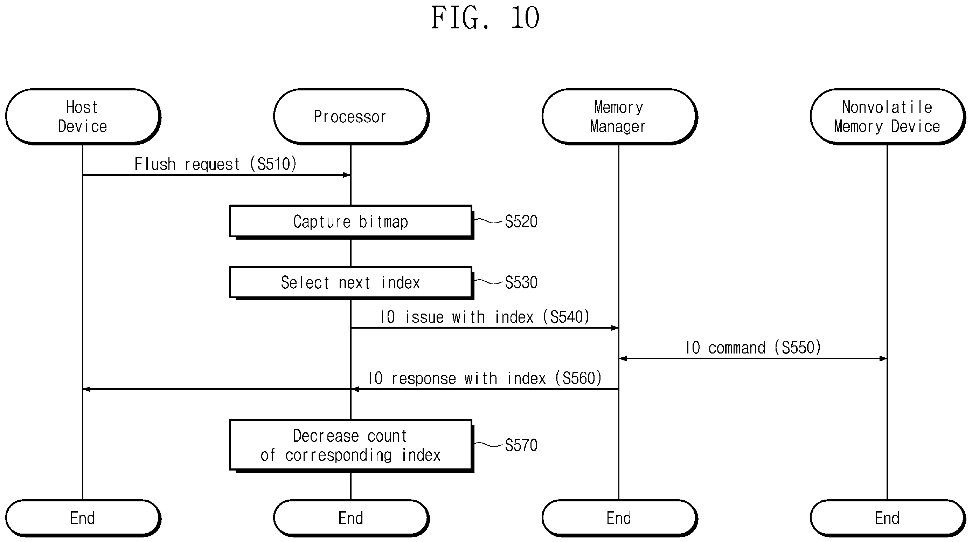

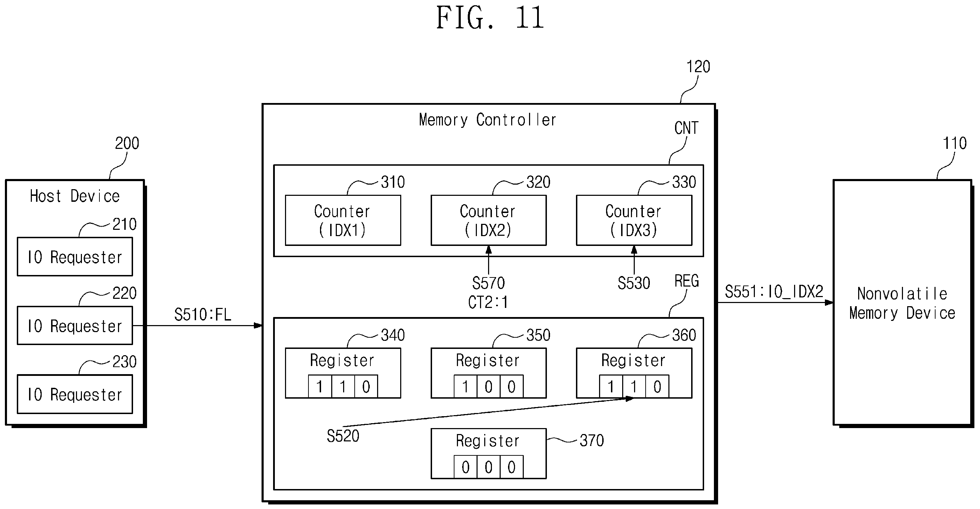

FIG. 10 illustrates subsequent operations in which the memory controller 120 manages IO requests and a flush request of the host device 200 by using the counter circuit CNT and the register circuit REG. FIG. 11 illustrates an example of a process in which IO requests and a flush request are managed by the counter circuit CNT and the register circuit REG depending on the method of FIG. 10.

Referring to FIGS. 1, 10, and 11, in operation S510, the host device 200 may send the flush request FL to the memory controller 120 (e.g., the processor 124 of the memory controller 120). For example, the second IO requester 220 of the host device 200 may send the flush request FL to the memory controller 120.

In operation S520, the processor 124 of the memory controller 120 may capture a bitmap. The processor 124 may capture the bitmap of the first register 340 and may store the captured bitmap in the third register 360. That is, the processor 124 may set values of the bits of the bitmap of the third register 360 to be the same as the values of the bits of the bitmap of the first register 340. Accordingly, the bitmap of the third register 360 may be "110".

In operation S530, the processor 124 of the memory controller 120 may select a next index. For example, the next index may be the third index IDX3. For counting, the processor 124 may select the third counter 330 corresponding to the third index IDX3.

In operation S540, the processor 124 of the memory controller 120 may send an IO issue with an index to the memory manager 126. For example, the IO issue corresponding to the IO request managed by the first counter 310 may be sent to the memory manager 126 in association with the first index IDX1. The IO issue corresponding to the IO request managed by the second counter 320 may be sent to the memory manager 126 in association with the second index IDX2. The IO issue corresponding to the IO request managed by the third counter 330 may be sent to the memory manager 126 in association with the third index IDX3. For example, the IO issue may further include a command type, an address, and a data pointer, which are associated with the IO issue. The IO issue corresponding to the IO request managed by the second counter 320 may be sent to the memory manager 126 in association with the second index IDX2.

In operation S550, the memory manager 126 may send the IO command to the nonvolatile memory device 110 such that an operation according to the IO request is performed.

When the completion of the operation according to the IO request is identified, in operation S560, the memory manager 126 may send the IO response with the index to the processor 124. For example, the IO response may further include a command type, a state indicating a success or failure, and a data pointer.

When the IO response is received, the processor 124 may send, to the host device 200, a response providing notification that the operation according to the IO request is completed. When the IO response is received, in operation S570, the processor 124 may decrease a count of a counter corresponding to the index.

In an embodiment, as illustrated in operation S551 of FIG. 11, the memory manager 126 of the memory controller 120 may send one IO command corresponding to the second index IDX2 to the nonvolatile memory device 110. Accordingly, in operation S570, the second count CT2 of the second counter 320 corresponding to the second index IDX2 may decrease to "1".

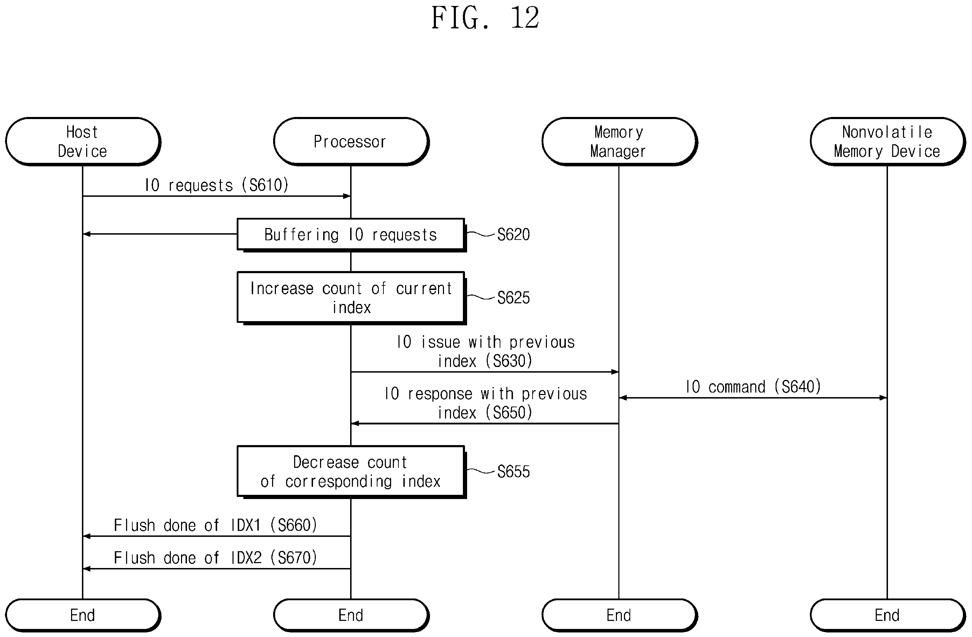

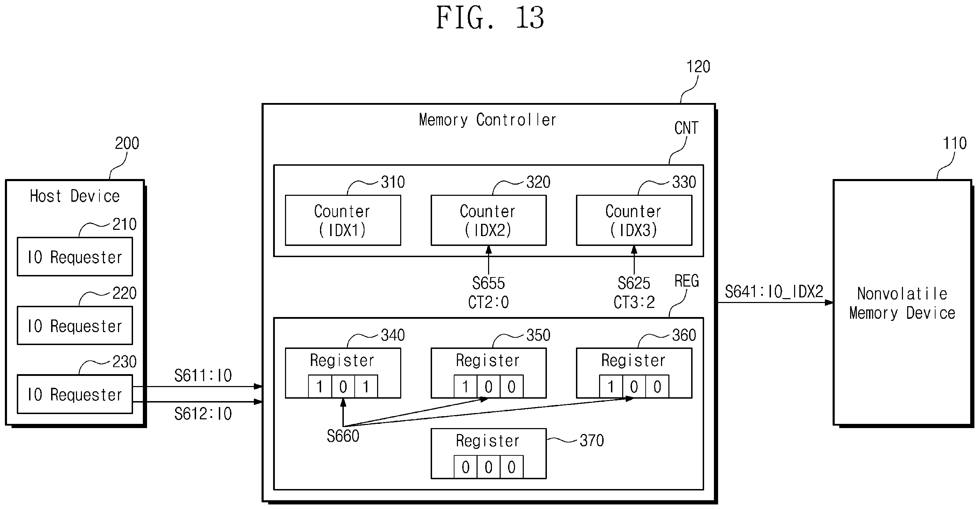

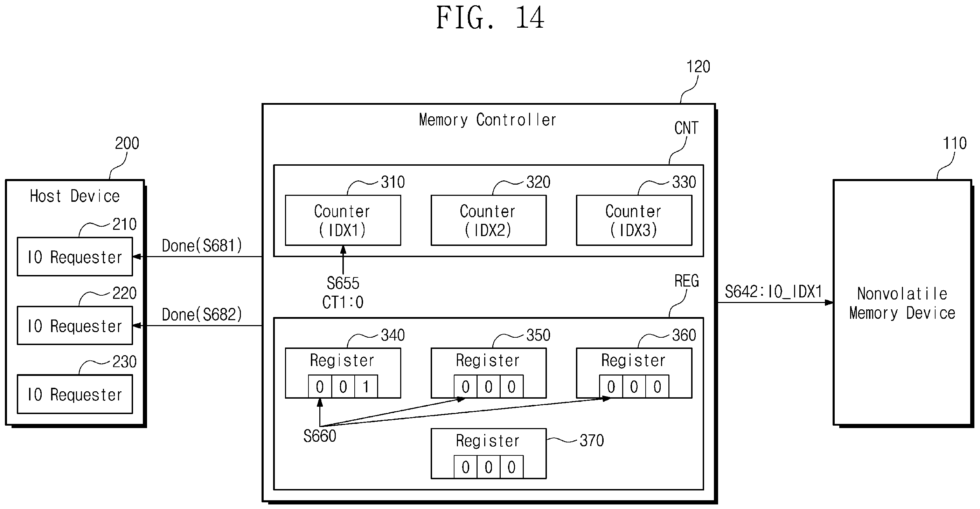

FIG. 12 illustrates subsequent operations in which the memory controller 120 manages IO requests of the host device 200 by using the counter circuit CNT. FIGS. 13 and 14 illustrate an example of a process in which IO requests are managed by the counter circuit CNT depending on the method of FIG. 12.

Referring to FIGS. 1, 12, and 13, in operation S610, the host device 200 may send the IO request to the memory controller 120 (e.g., the processor 124 of the memory controller 120). In an embodiment, as illustrated by operation S611 and operation S612 in FIG. 13, the host device 200 may sequentially send two IO requests IO to the memory controller 120.

For example, in operation S611, the third IO requester 230 may send the IO request IO to the memory controller 120. In operation S612, the third IO requester 230 may send the IO request IO to the memory controller 120.

In operation S620, the processor 124 of the memory controller 120 may buffer the IO request received from the host device 200. For example, the processor 124 may add the IO request to the IO queue provided in the internal buffer 123. When write data are received together with the IO request, the memory controller 120 may store the write data in the external buffer 130. The memory controller 120 may send, to the host device 200, a response indicating that the IO request is completely buffered.

In operation S630, the processor 124 of the memory controller 120 may increase a count of a counter corresponding to a current index. In an embodiment, the current index may be the third index IDX3. When a count value of the third counter 330 of the current index (e.g., the third index IDX3) is not "0", the memory controller 120 may set a corresponding bit of the first register 340 to "1". The bitmap of the first register 340 may be "111".

In an embodiment, the processor 124 may increase the first count CT1 of the first counter 310 each time the IO request IO is received from the host device 200. Because the IO request IO is received from the host device 200 two times, in operation S625, a third count CT3 of the third counter 330 may increase to "2".

In operation S630, the processor 124 of the memory controller 120 may send an IO issue with an index to the memory manager 126. For example, the IO issue corresponding to the IO request managed by the first counter 310 may be sent to the memory manager 126 in association with the first index IDX1. The IO issue corresponding to the IO request managed by the second counter 320 may be sent to the memory manager 126 in association with the second index IDX2. The IO issue corresponding to the IO request managed by the third counter 330 may be sent to the memory manager 126 in association with the third index IDX3. For example, the IO issue may further include a command type, an address, and a data pointer, which are associated with the IO issue.

In operation S640, the memory manager 126 may send the IO command to the nonvolatile memory device 110 such that an operation according to the IO request is performed. When the IO request is the write request, the memory manager 126 may further send data to the nonvolatile memory device 110. When the IO request is the read request, the memory manager 126 may receive data from the nonvolatile memory device 110. The memory manager 126 may identify the completion of the operation according to the IO request by identifying the transition of a specific signal, for example, the ready/busy signal from the nonvolatile memory device 110.

When the completion of the operation according to the IO request is identified, in operation S650, the memory manager 126 may send the IO response with the index to the processor 124. For example, the IO response may further include a command type, a state indicating a success or failure, and a data pointer.

When the IO response is received, the processor 124 may send, to the host device 200, a response providing notification that the operation according to the IO request is completed. For example, when the IO request is the write request, the IO response may include information about a write result. When the IO request is the read request, the IO response may be sent to the host device 200 together with data. When the IO response is received, in operation S655, the processor 124 may decrease a count of a counter corresponding to the index.

In an embodiment, as illustrated in operation S641 of FIG. 13, the memory manager 126 of the memory controller 120 may send one IO command corresponding to the second index IDX2 to the nonvolatile memory device 110. Accordingly, in operation S655, the second count CT2 of the second counter 320 corresponding to the second index IDX2 may decrease to "0".

Because the second count CT2 is "0", the processor 124 may set a bit (i.e., the second bit) corresponding to the second index IDX2 of the second counter 320 from among the bits of the bitmap of the first register 340 to "0". Also, the processor 124 may set a bit (i.e., the second bit) corresponding to the second index IDX2 of the second counter 320 from among the bits of the bitmap of the third register 360 to "0". However, a bit with a value of "1" is present in the bits of the bitmap of the second register 350 corresponding to the second index IDX2. For example, because the flush operation of the first index IDX1 is not completed, a bit (e.g., the first bit) corresponding to the first index IDX1 from among the bits of the bitmap of the second register 350 may be "1". Accordingly, the flush operation of the second index IDX2 is not completed.

Afterwards, for example, based on the round robin manner, the processor 124 may set the second bit corresponding to the second index IDX2 from among the bits of the bitmap of the third register 360 to "0" and may set the second bit corresponding to the second index IDX2 from among the bits of the bitmap of the second register 350 to "0".

Referring to FIGS. 1, 12, and 14, as illustrated in operation S642 of FIG. 14, the memory manager 126 of the memory controller 120 may send one IO command corresponding to the first index IDX1 to the nonvolatile memory device 110. Accordingly, in operation S655, the first count CT1 of the first counter 310 corresponding to the first index IDX1 may decrease to "0.

Because the first count CT1 is "0", the processor 124 may set a bit (i.e., the first bit) corresponding to the first index IDX1 of the first counter 310 from among the bits of the bitmap of the first register 340 to "0". Also, the processor 124 may set a bit (i.e., the first bit) corresponding to the first index IDX1 of the first counter 310 from among the bits of the bitmap of the second register 350 to "0". All the bits of the bitmap of the second register 350 corresponding to the first index IDX1 may have a value of "0". Accordingly, the flush operation of the first index IDX1 may be completed. In operation S660, the memory controller 120 may send, to the host device 200, a response providing notification that the flush operation of the first index IDX1 is completed.

Afterwards, for example, based on the round robin manner, the processor 124 may set the first bit corresponding to the first index IDX1 from among the bits of the bitmap of the third register 360 to "0" and may set the first bit corresponding to the first index IDX1 from among the bits of the bitmap of the fourth register 370 to "0". All the bits of the bitmap of the third register 360 corresponding to the second index IDX2 may have a value of "0". Accordingly, the flush operation of the second index IDX2 may be completed. In operation S670, the memory controller 120 may send, to the host device 200, a response providing notification that the flush operation of the second index IDX2 is completed.

As described above, the storage device 100 may manage the buffered IO requests by using a counter. When the flush request is received, the storage device 100 may manage new IO requests by using any other counter and may manage IO requests corresponding to the flush request by using a previous counter. Also, the storage device 100 may guarantee the order of completing Flush requests by using bitmaps of registers. Accordingly, the storage device 100 may support IO requests and flush requests of a plurality of IO requesters with the reduced resource.

In the above embodiments, examples in which the storage device 100 IO requests and flush requests of a plurality of IO requesters are described. However, the storage device 100 according to an embodiment is not limited to the case of processing IO requests and flush requests of a plurality of IO requesters. The storage device 100 may also process IO requests and flush requests of one IO requester by using counters and bitmaps of registers.

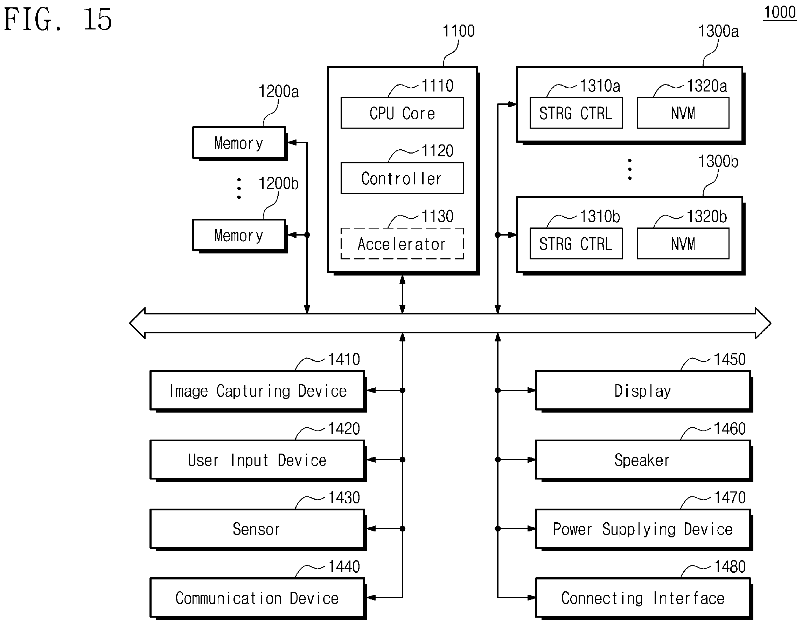

FIG. 15 is a diagram of a system 1000 to which a storage device is applied, according to an embodiment. The system 1000 of FIG. 15 may basically be a mobile system, such as a portable communication terminal (e.g., a mobile phone), a smartphone, a tablet personal computer (PC), a wearable device, a healthcare device, or an Internet of things (IOT) device. However, the system 1000 of FIG. 15 is not necessarily limited to the mobile system and may be a PC, a laptop computer, a server, a media player, or an automotive device (e.g., a navigation device).

Referring to FIG. 15, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, more specifically, operations of other components included in the system 1000. The main processor 1100 may be implemented as a general-purpose processor, a dedicated processor, or an application processor.

The main processor 1100 may include at least one CPU core 1110 and further include a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU) and be implemented as a chip that is physically separate from the other components of the main processor 1100.

The memories 1200a and 1200b may be used as main memory devices of the system 1000. Although each of the memories 1200a and 1200b may include a volatile memory, such as static random access memory (SRAM) and/or dynamic RAM (DRAM), each of the memories 1200a and 1200b may include non-volatile memory, such as a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include storage controllers(STRG CTRL) 1310a and 1310b and NVM(Non-Volatile Memory)s 1320a and 1320b configured to store data via the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as PRAM and/or RRAM.

The storage devices 1300a and 1300b may be physically separated from the main processor 1100 and included in the system 1000 or implemented in the same package as the main processor 1100. In addition, the storage devices 1300a and 1300b may have types of solid-state devices (SSDs) or memory cards and be removably combined with other components of the system 100 through an interface, such as the connecting interface 1480 that will be described below. The storage devices 1300a and 1300b may be devices to which a standard protocol, such as a universal flash storage (UFS), an embedded multi-media card (eMMC), or a non-volatile memory express (NVMe), is applied,without being limited thereto.

The image capturing device 1410 may capture still images or moving images. The image capturing device 1410 may include a camera, a camcorder, and/or a webcam.

The user input device 1420 may receive various types of data input by a user of the system 1000 and include a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery (not shown) embedded in the system 1000 and/or an external power source, and supply the converted power to each of components of the system 1000.

The connecting interface 1480 may provide connection between the system 1000 and an external device, which is connected to the system 1000 and capable of transmitting and receiving data to and from the system 1000. The connecting interface 1480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

In an embodiment, the storage device 100 described with reference to FIGS. 1 to 14 may be implemented with the storage devices 1300a and 1300b. The storage devices 1300a and 1300b may process IO requests of the main processor 1100 by using counters and may process flush requests of the main processor 1100 by using the counters and registers.

In the above embodiments, components according to the present disclosure are described by using the terms "first", "second", "third", etc. However, the terms "first", "second", "third", etc. may be used to distinguish components from each other and do not limit the present disclosure. For example, the terms "first", "second", "third", etc. do not involve an order or a numerical meaning of any form.

In the above embodiments, components according to embodiments of the present disclosure are referenced by using blocks. The blocks may be implemented with various hardware devices, such as an integrated circuit, an application specific IC (ASIC), a field programmable gate array (FPGA), a complex programmable logic device (CPLD), or firmware driven in hardware devices. Also, the blocks may include circuits implemented with semiconductor elements in an integrated circuit, or circuits enrolled as an intellectual property (IP).

According to embodiments, a storage device which manages IO requests by using counters and uses different counters based on an index of a flush request is provided. Accordingly, a storage device supporting a flush operation with the reduced resource and an operating method of the storage device are provided.

While aspects of embodiments have been described, it will be apparent to those of ordinary skill in the art that various changes and modifications may be made thereto without departing from the spirit and scope of the present disclosure as set forth in the following claims.

## Claims

1. A storage device comprising:
a nonvolatile memory device; and
a controller comprising a plurality of counters, wherein the controller is configured to:
increase a first count of a first counter among the plurality of counters based on first input/output (IO) requests received from an external host device; and
increase a second count of a second counter among the plurality of counters based on second IO requests received from the external host device after a first flush request is received from the external host device.

2. The storage device of claim 1, wherein the controller is further configured to decrease the first count based on the nonvolatile memory device being accessed according to one first IO request among the first IO requests independent of the first flush request.

3. The storage device of claim 2, wherein the controller is further configured to decrease the second count, after the first flush request is received, based on the nonvolatile memory device being accessed according to one second IO request among the second IO requests.

4. The storage device of claim 3, wherein the controller is further configured to increase a third count of a third counter among the plurality of counters based on third IO requests being received from the external host device after a second flush request is received from the external host device.

5. The storage device of claim 4, wherein the controller is further configured to:
decrease the first count, independent of the first flush request and the second flush request, based on the nonvolatile memory device being accessed according to the one first IO request;
decrease the second count, after the first flush request is received and independent of the second flush request, based on the nonvolatile memory device being accessed according to the one second IO request; and
decrease the third count, after the second flush request is received, based on the nonvolatile memory device being accessed according to one third IO request among the third IO requests.

6. The storage device of claim 2, wherein the controller is configured to:
generate an IO issue comprising a first index indicating the first counter based on the one first IO request; and
decrease the first count based on the IO issue being completed.

7. The storage device of claim 1, wherein the controller is further configured to:
manage a first bitmap comprising bits respectively corresponding to the plurality of counters;
set, based on the first flush request, a bit of the first bitmap corresponding to the first counter to a first value in response to the first count not being "0"; and
set, based on the first flush request, the bit of the first bitmap corresponding to the first counter to a second value in response to the first count being "0".

8. The storage device of claim 7, wherein the controller is further configured to generate, after the first bitmap is set in response to the first flush request, a second bitmap comprising bits corresponding to the first bitmap.

9. The storage device of claim 8, wherein the controller is further configured to set, in response to the first count being "0", the bit of the first bitmap corresponding to the first counter to the second value and the bit of the second bitmap corresponding to the first counter to the second value.

10. The storage device of claim 9, wherein the controller is further configured to send, based on all the bits of the second bitmap having the second value, a response to the external host device indicating that the first flush request is completed.

11. The storage device of claim 8, wherein the controller is further configured to generate, based on a second flush request being received from the external host device, a third bitmap comprising bits corresponding to the first bitmap.

12. The storage device of claim 11, wherein the controller is further configured to send, based on all the bits of the third bitmap having the second value, a response to the external host device indicating that the second flush request is completed.

13. The storage device of claim 8, wherein the controller is further configured to manage a plurality of bitmaps, the plurality of bitmaps comprising the first bitmap and the second bitmap, and
wherein a number of the plurality of bitmaps is greater than a number of the plurality of counters by "1".

14. The storage device of claim 1, wherein the controller is further configured to:
send, to the external host device, a response indicating that the first IO requests are completed after the first IO requests are buffered; and
send, to the external host device, a response indicating that the second IO requests are completed after the second IO requests are buffered.

15. The storage device of claim 1, wherein the controller is further configured to provide, based on a request of the external host device, information indicating a number of the plurality of counters to the external host device.
